(19) Europäisches Patentamt
European Patent Office
Office européen des brevets

(11) Publication number: 0 106 563
A1

(12) # EUROPEAN PATENT APPLICATION

(21) Application number: 83305580.9

(22) Date of filing: 21.09.83

(51) Int. Cl.³: A 01 N 25/34
C 02 F 1/50, A 01 N 43/80
A 01 N 25/10, A 01 N 25/22

(30) Priority: 23.09.82 US 422495

(43) Date of publication of application:
25.04.84 Bulletin 84/17

(84) Designated Contracting States:
AT BE CH DE FR GB IT LI LU NL SE

(71) Applicant: Rohm and Haas Company
Independence Mall West
Philadelphia, Pennsylvania 19105(US)

(72) Inventor: Melamed, Sidney
8270 Thomson Road
Elkins Park, Pa. 19117(US)

(74) Representative: Angell, David Whilton et al,
Rohm and Haas Company Patent Department
Chesterfield House Bloomsbury Way
London WC1A 2TP(GB)

(54) **Dry solid microbiocidal compositions, methods of controlling microorganisms and of safening isothiazolone microbiocides.**

(57) A solid particulate microbiocidal composition is embedded in a water-insoluble, high-melting solid binder to form a solid protracted release microbiocidal article useful in aqueous systems. The microbiocidal compound has sufficient water solubility to provide a microbiocidally effective amount thereof in admixture with an inert, finely-divided water-insoluble solid carrier material. Especially useful are microbiocidal 3-isothiazolones and 2-substituted-1,2-benzisothiazolones, and metal salt stabilized derivatives thereof, admixed with silicaceous diatomaceous earth and embedded in a binder such as paraffin wax. By this means release of active ingredient is controlled and the active ingredient, which has known irritant properties to human skin at high concentrations in aqueous solutions, is put into a safer form.

EP 0 106 563 A1

0106563

DRY SOLID MICROBIOCIDAL COMPOSITIONS, METHODS OF CONTROLLING MICROORGANISMS AND OF SAFENING ISOTHIAZOLONE MICROBIOCIDES

This invention is concerned with dry solid microbiocidal compositions, methods of controlling microorganisms and of safening isothiazolone microbiocides. Of special interest as the microbiocidal compounds are 3-isothiazolones and 2-substituted-1,2-benz-isothiazolones (hereafter "isothiazolones"), which have a known tendency to effect skin irritancy to man and to evolve nontoxic gases when provided in aqueous solution at concentrations convenient for shipping.

The isothiazolones are a class of chemical compounds known to possess excellent and useful microbiocidal properties and resistance to common additives and contaminants. Many 3-isothiazolones are disclosed in U. S. Patents 3,761,488; 3,849,430; 3,870,795; 4,067,878; 4,150,026 and 4,241,214. U.S. Patents 3,517,022; 3,065,123; and 3,761,489 disclose 2-substituted-1,2-benzisothiazolones. U. S. Patent 3,849,430 discloses a method for preparing the isothiazolones.

While these patent specifications disclose the use of isothiazolones in a variety of microbiocidal end uses such as, for example, those uses and formulations and compositions disclosed in U. S. Patent 3,761,488 at columns 15-19 and in the actual examples thereafter, isothiazolones are generally made available in combination with a liquid carrier such as water or in aqueous compositions. Column 19, line 66 *et seq*. discloses that isothiazolones can be taken up or mixed with a finely divided particled solid carrier, as for example, clays, inorganic silicates, carbonates, silicas and organic carriers. Column 20, line

25 *et seq*. discloses that a convenient method for preparing a solid formulation is to impregnate the isothiazolone toxicant onto the solid carrier by means of a volatile solvent, such as acetone. However, attempts to produce solid formulations have resulted in formulations which tended to coalesce (or "cake") or to give extremely lightweight particles (or "dusts").

U. S. Patent 4,011,172 discloses chlorine bleaching compounds dissolved in water or other suitable solvent thickened by the addition of particulate thickening agent, for example, silicate materials, water-swellable and water-soluble polyacrylamides and cellulose derivatives, and synthetic clays, the thickened bleaching compounds being contained in a perforated pouch made of plastic material.

It is also known to protract release of active ingredients in pharmaceutical compositions by embedding the active ingredient in a fat, wax, lacquer, or plastic composition. U.S. Patent 3,437,728 discloses a sustained release pharmaceutical composition in which the active ingredient is embedded in, or impregnated with, paraffin and compressed with conventional adjuvants to form tablet cores. The crude cores thus obtained are coated with a protective diaphragm of talc or other acid- and alkali-resistant mineral materials and a mixture of paraffin and stearic acid or other higher fatty acids or with acetyl cellulose or mixture of these materials.

U.S. Patent 2,887,438 discloses the preparation of sustained release pharmaceutical tablets by preparing an inner core by melting and mixing solid, high-melting carriers (for example, carnauba wax and stearyl alcohol), adding an active therapeutic component and dispersing it thoroughly, allowing the mixture to solidify, passing the resultant mass through a sieve, adding a lubricant, and compressing the mixture by mechanical means. The resulting

granules are then coated with shellac. These granules are then mixed with portions of coating granules prepared by the fusing of the active ingredient with solid, high-melting carriers, and the granular coating is compressed evenly around the core using suitable mechanical means.

Isothiazolones are commonly provided in commerce in aqueous solution, usually with inorganic, alkaline earth metal salts as stabilizers to nucleophilic agents and aqueous bases, in the presence of which isothiazolones undergo a ring cleavage reaction which renders them inactive against microorganisms. Although solid alkaline earth metal salt complexes are known (U. S. Patents 4,150,026 and 4,241,214 mentioned above), these salt complexes suffer the disadvantage that they badly corrode processing equipment used to remove water in the course of producing the solid dry salt complex product, and the final solid salt complex product tends to be extremely dusty and thereby irritating when handling the product.

A typical, useful commercially available 3-isothiazolone product is Kathon 886 (Rohm and Haas Company), a metal salt-stabilized aqueous solution of 5-chloro-2-methyl-3-isothiazolone and 2-methyl-3-isothiazolone (3:1) containing 14% active ingredient and $Mg(NO_3)_2$ plus $MgCl_2$ as stabilizers. Such commercial products suffer the disadvantages of being irritating to the skin when spilled during handling and evolving nontoxic gases which build up pressure in sealed containers used in shipping and transportation.

It has been found that these disadvantages can be overcome by providing water-soluble microbiocidal compounds, especially 3-isothiazolones, in the form of dry solid compositions, as disclosed in our copending European Patent Application No. filed on the seme day as the present application and claiming priority from U.S. Serial No.422498.

The present invention is a further improvement to overcome these disadvantages that permits direct handling of the biocidal compositions.

According to this invention an article useful in the storage, handling and transportation of microbiocidal compound and its provision at a controlled, protracted rate in a method for controlling living microorganisms in an aqueous system comprises:

(a) a particulate, solid microbiocidal composition useful in aqueous systems comprising:

(i) 0.1-70 weight %, based on total weight of said composition, of a microbiocidal compound having sufficient water solubility to provide a microbiocidally effective amount thereof; and

(ii) 99.9-30 weight %, based on total weight of said composition, of solid carrier material;

embedded in:

(b) water-insoluble, high-melting solid binder.

The article can for example be in the form of a solid disc or plug or in the form of encapsulated, pelletized particles.

The solid binder can be any conventional water-insoluble, high-melting solid binder material. By "high melting" is meant a melting point of 40-200° C, preferably 50-125° C. Examples of suitable materials for use in or as the water-insoluble, high-melting solid binder component include waxes such as paraffin wax, beeswax, carnauba wax; fatty acids, alcohols, and esters such as stearic acid, stearyl alcohol, and glyceryl tristearate; synthetic waxes, alcohols, and esters; and polymeric materials such as polyalkylene ethers, polyolefins, polyesters, polyamides, polyacrylates, polymethacrylates,

and polyvinyl aromatic compounds; and compatible mixtures of the foregoing. Preferably, the high-melting solid binder is paraffin wax. The high-melting solid binder may be used in any suitable proportion to the amount of particulate solid microbiocidal composition. A generally useful ratio of paraffin wax to microbiocidal composition is from about 1:2 to about 2:1 by weight.

Preferably, in the particulate solid microbiocidal composition (a), microbiocidal compound (i) comprises microbiocidally-effective isothiazolone(s) represented by the formula:

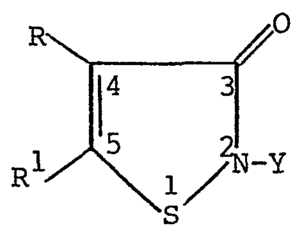

wherein

Y is an unsubstituted or substituted $C_1$-$C_{18}$ alkyl group, an unsubstituted or substituted $C_2$-$C_{18}$ alkenyl or alkynyl group, an unsubstituted or substituted $C_3$-$C_{12}$ cycloalkyl group, an unsubstituted or substituted aralkyl group of 6-10 carbon atoms, or an unsubstituted or substituted aryl group of 6-10 carbon atoms;

R is hydrogen, halogen or a $C_1$-$C_4$ alkyl group;

$R'$ is hydrogen, halogen or a $C_1$-$C_4$ alkyl group; or

R and $R'$ can be taken together with the C=C bond of the isothiazolone ring to form an unsubstituted or substituted benzene ring;

or said isothiazolone(s) stabilized with metal salt in an amount of 1-60 weight %, based on weight of isothiazolone and metal salt, said metal salt(s) being represented by the formula

$(MX_n)$

wherein

M is a cation of sodium, potassium, calcium, magnesium, copper, iron, zinc, barium, manganese, silver, cobalt and/or nickel;

X is chloride, bromide, iodide, sulfate, nitrate, nitrite, acetate, chlorate, perchlorate, bisulfate, bicarbonate, oxalate, maleate, p-toluene-sulfonate, carbonate, and/or phosphate; and

n is an integer for which the anion X satisfies the valence of the cation M;

and said solid carrier material (ii) comprises inert, finely-divided water-insoluble solid material selected from silicaceous diatomaceous earth, high water absorption capacity calcium silicate granular material, charcoal, clays, vermiculite, corn cobs and wood.

It is to be understood that, as the number of carbon atoms in the substituent group "Y" increases, and as halogens are substituted on the isothiazolone ring, water-solubility decreases.

By a "substituted alkyl group" is meant an alkyl group having one or more of its hydrogens replaced by another substituent group. Examples of the substituted alkyl groups which characterize the isothiazolones preferably used in this invention include hydroxyalkyl, haloalkyl, cyanoalkyl, alkylamino, dialkylamino, arylaminoalkyl, carboxyalkyl, carbalkoxyalkyl, alkoxyalkyl, aryloxyalkyl, alkylthioalkyl, arylthioalkyl, haloalkoxyalkyl, cycloaminoalkyl such as morpholinylalkyl and piperidinylalkyl and pyrrolodinylalkyl and the like, carbamoxyalkyl, alkenyl, haloalkenyl, alkynyl, haloalkynyl and isothiazolonylalkyl.

By a "substituted aralkyl group" is meant an aralkyl group having one or more of the hydrogens on either the aryl

ring or the alkyl chain replaced by another substituent group. Examples of the substituted aralkyl group which characterize the isothiazolones preferably used in this invention include halo, lower (i.e. $C_1$ to $C_8$ preferably $C_1$ to $C_4$) alkyl and, lower alkoxy.

By a "substituted aryl group" and "substituted benzene ring" is meant an aryl group and benzene ring, respectively, such as phenyl, naphthyl, or pyridyl groups, having one or more of the hydrogens on the aryl ring replaced by another substituent group. Examples of such substituent groups include halo, nitro, lower alkyl, lower alkoxy, lower alkyl- and acylamino, lower carbalkoxy and sulfonyl.

By the expression "water-soluble" as applied to the isothiazolones used in this invention is meant an isothiazolone or combination of isothiazolones characterized by having a water solubility of about 1000 ppm (0.1%) or greater at room temperature (25°C). Highly water-soluble isothiazolones can have a room temperature water-solubility even as high as 150,000 ppm to nearly infinitely soluble.

By the expression "microbiocidal compound" is meant those compounds effective to control those microorganisms of the group of bacteria, fungi (including molds and yeasts) and algae. In the method of the invention for controlling living microorganisms, by the expression "microorganisms" is meant bacteria, fungi (including molds and yeasts) and algae.

When used alone, the expression "isothiazolones" is meant to include the "free" isothiazolones and the metal salt complexes of the free isothiazolones.

More preferably, the microbiocidal composition used in this invention comprises (i) 1-35 weight %, based on total weight of said composition, of at least one water-soluble isothiazolone having a water solubility of about 1000 ppm or greater wherein

Y is an unsubstituted or substituted $C_1$-$C_{18}$ alkyl group or $C_3$-$C_{12}$ cycloalkyl group;

R is hydrogen or halogen;

$R'$ is hydrogen or halogen; or

R and $R'$ are taken together with the C=C bond of the 3-isothiazolone ring to form a benzene ring;

or said 3-isothiazolone stabilized with said metal salt; and (ii) 99-65 weight %, based on total weight of said composition, of a solid carrier material selected from silicaceous diatomaceous earth, high water absorption capacity calcium silicate granular material, high purity silica (e.g. Aerosil and Sipernet) and clays. Most preferably, the composition of the invention comprises (i) 2-25 weight %, based on total weight of said composition, of said isothiazolone wherein Y is methyl, R is hydrogen and $R'$ is chlorine; or of a mixture of said isothiazolones in aqueous solution wherein Y is methyl, R is hydrogen and $R'$ is chlorine and Y is methyl, R is hydrogen and $R'$ is hydrogen; or said isothiazolone(s) stabilized with said metal salt wherein said metal salt is $Mg(NO_3)_2$ or a mixture of $Mg(NO_3)_2$ and $MgCl_2$; and (ii) 98-75 weight %, based on total weight of said composition, of silicaceous diatomaceous earth.

By way of example, there may be used in combination with the above-defined most preferred, or more preferred, isothiazolones the isothiazolone having a water solubility of about 500 ppm wherein Y is n-octyl or t-octyl and R and $R'$ are both hydrogen, providing, of course, that the water solubility of the combination is 1000 ppm or greater.

Another aspect of the invention is a method for controlling living microorganisms in an aqueous system which comprises incorporating into the aqueous system the article of the invention containing an amount of the composition used in the invention sufficient to provide in the aqueous system a microbiocidally-effective amount of said microbiocidal compound.

Yet another aspect of the invention is a method for safening microbiocidal isothiazolone compounds which comprises preparing a solid wax (or wax-like) disc or plug containing embedded therein a particulate solid microbiocidal composition comprising a microbiocidally-effective isothiazolone (free isothiazolone or metal salt complex thereof) and an inert, finely-divided water-insoluble solid carrier material. Still another aspect of the invention is a method for the controlled, protracted release of microbiocidal compounds, for example, microbiocidal isothiazolones, into an aqueous system by the steps of (1) preparing the article of the invention defined above; (2) introducing the article into the aqueous system; (3) permitting the aqueous system to diffuse into the article; and (4) permitting the microbiocidal compound to dissolve and to be released into and diffuse through the aqueous system; the rate of release of microbiocidal compound being controlled and protracted to the desired interval for release of all of the microbiocidal compound by adjusting the ratio of the surface area of the solid disc or particulate article to the volume ratio of the solid disc or particulate article combined with selecting a microbiocidal compound characterized by having a higher or lower water solubility.

The preparation and properties of representative isothiazolones are described in U. S. Patents 3,517,022; 3,761,488 and 3,065,123. U. S. Patent 3,849,430 further discloses a process for the preparation of representative isothiazolones. U.S. Patents 3,870,795 and 4,067,878 describe metal salt stabilized solutions of 3-isothiazolones which are useful according to this invention. Additional isothiazolones which are useful according to the invention are those disclosed in U. S. Patent 4,310,590.

The finely-divided water-insoluble solid material can for example be selected from silicaceous diatomaceous earth,

high water absorption capacity calcium silicate material, and clays. Suitable silicaceous diatomaceous earth material is described in the Johns-Manville Corporation Technical Bulletin FF-160A, 10-80 concerning Celite Diatomite Filter Aids and Natural, Calcined, and Flux-Calcined Grades thereof. Suitable high water absorption capacity calcium silicate material is commercially available under the trademark "Micro-Cel" from the Johns-Manville Corporation.

Especially preferred is a diatomaceous earth material commercially available as Celite 545 (Johns-Manville Corporation).

Of course, conventional adjuvants may be incorporated into the solid microbiocidal composition used in producing the article of this invention for example by first dissolving them in the aqueous or inert organic solvent solution of the isothiazolone(s) and then blending the solution with the solid carrier material. One useful additive for use in the solid microbiocidal composition is a dye which would impart a readily visible color. Thus, whenever any solid microbiocidal composition would accidently be spilled onto the skin during production of the article or whenever isothiazolone would leach out of the article, the spilled material could readily be observed and removed before the irritant could leach out of the solid and cause skin burns. This is in contrast to the case involving accidental spillage of the aqueous microbiocidal solution of the isothiazolone when handling in association with an aqueous system in which case it would be difficult to distinguish between harmless aqueous system and irritating isothiazolone concentrate. Other useful adjuvants and additives include chelating agents, surfactants, dispersants, buffers, and the like.

Alternatively, other conventional adjuvants and additives used with microbiocidal compounds, such as the isothiazolones used in this invention, may be combined with

the microbiocidal composition in the high-melting solid binder independent of incorporation into microbiocidal compositions. The article of the invention may be used advantageously in metal-working fluids, swimming pools, water towers such as water cooling towers and toilet bowls or cisterns.

The article according to the invention can afford many advantages. One obtainable advantage is that the article is a solid form of the microbiocidal composition, especially isothiazolone compositions of isothiazolones known to be skin irritants, which is more convenient for handling, transporting, and shipping. The article is, therefore, also a safer form of the microbiocidal composition, especially the isothiazolone composition, in that it obviates contact of the isothiazolone composition with the skin and the leaching-out from the composition in the dry article of the isothiazolone.

Another obtainable advantage is that the article may permit the use of the solid microbiocidal composition, especially the solid isothiazolone composition, in applications in which freely-dispersed, finely-divided solid matter could not be tolerated, for example, in water cooling towers and swimming pools and the like.

For use in metal-working fluids, swimming pools, water towers, such as water cooling towers, toilet bowls, washing machines, and the like, the article of the invention can conveniently be removed from its shipping container, placed into the aqueous system to be treated, and, when the microbiocidal compound has completely leached-out of the article, the solid disc or particles containing the solid carrier and binder materials can be removed by conventional techniques, for example, by hand, using tongs to dip the solid disc from the aqueous system.

The article of this invention may be prepared in the form of a solid disc or "plug" by first providing a solid

microbiocidal composition of microbiocidal compound absorbed on a solid carrier. For example, an aqueous or organic solvent solution of one or more of the afore-mentioned isothiazolones may be blended with Celite 545 and, when organic solvent is used, the solvent may be removed by evaporation. Then, the solid microbiocidal composition may be mixed with a water-insoluble, high-melting solid binder, for example, molten paraffin or other wax or granulated, particulate polymeric material, such as the crosslinked carboxyvinyl polymer disclosed in U.S. Patent 2,798,053 and the hydrophilic hydroxyalkyl (meth)acrylate polymers disclosed in U.S. Patent 3,577,512. Of course, the microbiocidal compound and solid carrier material need not be pre-mixed but may be independently mixed with the solid binder. When molten wax, fatty acid, or polymeric material are used as the solid binder, the mixture may be cooled and the resulting solid disc may then be easily removed. The solid disc may then be added to the desired aqueous system by any suitable means. When granulated, particulate polymeric material is used as the solid binder, the uniform mixture of solid binder with microbiocidal composition may be compressed to form a solid disc using suitable, conventional means, such as those described in U.S. Patent 3,330,729.

Alternatively, the article of this invention may be prepared in the form of a granular, particulate encapsulated solid or "pelletized" solid. The microbiocidal composition, or the components thereof, independently, may be mixed with molten binder (for example, paraffin wax) in conventional proportions required to obtain solid carrier and microbiocidal compound embedded in binder (for example, paraffin wax) in the form of a pelletized solid. (See U.S. Patent 3,437,728 mentioned above.) Alternatively, the solid disc of microbiocidal composition embedded in wax described above may be ground with dry ice to obtain pellets. In

another alternative, a molten mixture of microbiocidal compound and solid carrier and solid binder may be extruded downward as droplets through jets and air-cooled in long columns or extruded as ribbons or rods and pelletized by cutters. In still another alternative, articles according to this invention, especially the pelletized form of the articles, may be coated by conventional coating means with a thin coat of conventional coating materials such as shellac (U.S. Patent 3,274,061) and modified shellac (U.S. Patents 3,738,952 and 3,741,395), cellulose derivatives (U.S. Patents 3,504,082; 3,282,790; and 3,741,397), synthetic polymers (U.S. Patents 3,520,970, aminoalkyl acrylates; 3,143,472, half esters of maleic anhydride copolymers; 3,055,433, epoxy resin coatings; and 3,325,365, polyvinyl acetate coatings). The thin coating applied to the article of the invention provides a means to further control and protract the release of microbiocidal compound from the article. The pellets may be placed in the aqueous system to be treated or packaged, for example, in a flexible, water-permeable membrane and the package placed in the aqueous system to be treated.

The following examples illustrate some embodiments of the invention. In the Examples all parts and percentages are by weight unless otherwise indicated and all temperatures are in degrees Centigrade unless otherwise indicated. Percentages of the metal salts (magnesium nitrate and magnesium chloride) are based on the molecular weight of the usual commercial form.

Example 1

To 75 g. of Celite 545 in a glass bottle was added 75 g. of Kathon 886[1]. The mixture was then stirred by hand with a spatula until it appeared to be uniformly mixed and

free-flowing. No drying by heating was required or desired. The resulting solid product contained one-half of the initial amount of active ingredient per unit weight of product, that is, the solid composition contained 7 weight % of active ingredient.

Example 2

A solid microbiocidal composition containing 20 weight % of active ingredient was prepared by dissolving 2.66 g. of crystalline 5-chloro-2-methyl-3-isothiazolone in 15 ml. of methanol. To this solution there was added 0.6 g. of $Mg(NO_3)_2.6\ H_2O$. The resulting solution was added to 10 g. of Celite 545 in a 4 fl. oz. bottle and the mixture was stirred by hand using a spatula until it appeared to be uniformly mixed and free-flowing. Methanol was removed by air drying overnight (or by heating the mixture under reduced pressure), and a uniform, free-flowing particulate solid was obtained.

[1]Kathon 886 is 5-chloro-2-methyl-3-isothiazolone blended with 2-methyl-3-isothiazolone in a weight ratio of 3:1 with 15 wt. % $Mg(NO_3)_2$ and 9 wt. % of $MgCl_2$ in aqueous solution containing 14% active ingredient, commercially available from the Rohm and Haas Company.

Example 3

This example illustrates the property of the solid microbiocidal composition whereby the solid composition tends not to evolve gasses to the extent that the known aqueous solutions of 3-isothiazolones evolve gasses even after heat treatment to eliminate volatile components.

The solid compositions were prepared as follows:

Water was partially removed from Kathon 886 aqueous concentrate under reduced pressure (65° C/40 mm Hg), and solid carrier material (Celite 545, available from Johns-Manville Corporation, Attaclay X-250, available from the Minerals and Chemicals Corporation of America, Attapulgus Clay Products, HiSil T-600, available from Pittsburgh Plate and Glass Company, or mixtures thereof) was added to the residue to obtain a flowable solid composition.

The table below describes the formulation and properties of representative compositions.

SOLID FORMULATIONS FROM KATHON 886[1] LIQUID CONCENTRATE

Components of the Formulations

| | | % Active Ingred. (by GLC) | |
|---|---|---|---|
| Form Number | 3A | 3B | 3C[6] |
| % AI[2] | 14.1 | 14.07 | 14.0 |
| % $Mg(NO_3)_2$ $6H_2O$ | 25.9 | 25.9 | 25.9 |
| % $MgCl_2$ $6H_2O$ | 19.2 | 19.2 | 19.2 |
| % "Free" $H_2O$ | 1.3 | 0.1 | 40.9 |
| % Celite 545[3] | 29.3 | - | - |
| % Attaclay[4] X-250 | - | 29.9 | - |
| % HiSil[5] T-600 | 10.2 | 10.8 | - |
| Gauge Pressure at 250°C after 15 hrs at 93°C $N/m^2 \times 10^{-3}$ (psi) | 17.8 (2.6) | 9.6 (1.4) | 82.2-89 (12-13) |
| Before Gassing Test | 13.6 | 11.4 | 14 |
| After Gassing Test | 11.5 | 10.7 | 13.8 |

[1] Kathon 886 is a 3.1 weight mixture of 5-chloro-2-methyl-3-isothioazolone and 2-methyl-3-isothiazolone, 14% active ingredient in aqueous solution, with 15% $Mg(NO_3)_2$ and 7% $MgCl_2$ available from the Rohm and Haas Company.

[2] AI = Active Ingredient

[3] Celite 545 available from the Johns-Manville Corporation

[4] Attaclay X-250 available from the Attapulgus Clay Company

[5] HiSil T-600 available from the Pittsburgh Plate and Glass Company

[6] Formulation 3C is the control for comparative purposes only.

Example 4

This example illustrates the preparation of a wax encapsulated microbiocidal article.

To four parts (20 g.) of molten paraffin wax in a 100 ml glass beaker in an oil both maintained at 90°C there was added with hand stirring 6 parts (30 g) of the 7 weight % active ingredient particulate solid microbiocidal composition of Example 1 above (Kathon 886 absorbed on Celite 445, 7 weight % active ingredient). After thoroughly mixing until the mixture of molten wax and microbiocidal composition appeared to be uniform, the mixture was then cooled to room temperature (about 23-24°C) to provide a solid disc ("wax plug") containing 4.2 weight %, based on total of wax and microbiocidal composition, of active ingredient. The wax plug is easily removed from the beaker.

The following table summarizes the rate of release in water of active ingredient from two representative "wax plug" articles containing embedded therein the microbiocidal composition of Example 1 prepared as described above.

| | Article A* | Article B* |
|---|---|---|
| weight | 3.8 g. | 46.1 g. |
| diameter | 3.2 cm | 4.5 cm |
| height | 1.0 cm | 2.8 cm |
| surface area:volume | 3.25 $cm^{-1}$ | 1.6 $cm^{-1}$ |

*(paraffin wax:microbiocidal composition) = 4:6, 4.2 wt. % a.i.

% A.I. Release After X Days

| X Days | % A.I. Release Article A | % A.I. Release Article B |
|---|---|---|
| 6 days | 67% | N.M. |
| 7 days | N.M. | 13% |
| 9 days | 100% | N.M. |
| 15 days | N.M. | 30% |
| 32 days | N.M. | 84% |

N.M. = not measured

As can be observed from the data above, the wax plugs release active ingredient into water at a rate determined by the ratio of the surface area:volume of the wax plug. The rate of release of active ingredient may be protracted by diminishing the ratio of the surface area to the volume of the wax plug.

Example 5

In a manner similar to that of Example 4, the following pellets were prepared using appropriate temperatures above the melting or glass transition temperatures.

Polymer = A*  Product of Example I = B*

| | | Parts by Weight | |
|---|---|---|---|
| | | *A | *B |
| a. | Polyethylene (70°C) | 1 | 1 |
| b. | Poly(Methyl Methacrylate) (85°C)[1] | 1.5 | 1 |
| c. | Wax (55°C) | 1.5 | 1 |
| d. | Polystyrene (100°C)[1] | 1 | 1 |
| e. | Mixed Polyamide (125°C) | .66 | 1 |

[1]Transition temperature

The following words are trademarks which may or may not be registered in some or all of the designated states:

Kathon,
Celite,
Micro-Cel,
Attaclay,
Hi-Sil,
Aerosil,
Sipernet.

CLAIMS:

1. A microbiocidal article comprising:

(a) particulate solid microbiocidal composition useful in aqueous systems comprising:

(i) 0.1-70 weight %, based on total weight of said composition, of microbiocide having sufficient water-solubility to provide a microbiocidally-effective amount thereof; and

(ii) 99.9-30 weight %, based on total weight of said composition, of inert, finely-divided water-insoluble solid carrier material;

embedded in:

(b) water-insoluble, high-melting solid binder.

2. An article according to claim 1 wherein said binder comprises material(s) having a melting point in the range 40° C to 200° C, for example paraffin wax, beeswax, and carnauba wax; fatty acids, alcohols, and esters; synthetic waxes, alcohols, and esters; polymeric materials including polyalkylene ethers, polyolefins, polyesters, polyamides, polyacrylates, polymethacrylates, and polyvinyl aromatic compounds; and mixtures thereof.

3. An article according to claim 1 or 2 wherein the said microbiocide comprises (i), microbiocidally-effective isothiazolone of the formula:

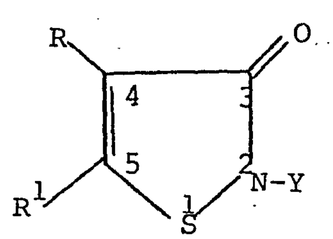

wherein

Y is an unsubstituted or substituted $C_1$-$C_{18}$ alkyl group, an unsubstituted or substituted $C_2$-$C_{18}$ alkenyl or alkynyl group, an unsubstituted or substituted $C_3$-$C_{12}$ cycloalkyl group, an unsubstituted or substituted aralkyl group of 6-10 carbon atoms, or an unsubstituted or substituted aryl group of 6-10 carbon atoms;

R is hydrogen, halogen or a $C_1$-$C_4$ alkyl group;

$R'$ is hydrogen, halogen or a $C_1$-$C_4$ alkyl group; or

R and $R'$ can be taken together with the C=C bond of the isothiazolone ring to form an unsubstituted or substituted benzene ring;

or at least one of said isothiazolones stabilized with at least one metal salt used in an amount of 1-60 weight %, based on weight of 3-isothiazolone and metal salt, said metal salt being represented by the formula:

$$(MX_n)$$

wherein

M is a cation of a metal selected from sodium, potassium, calcium, magnesium, copper, iron, zinc, barium, manganese, silver, cobalt and nickel;

X is an anion selected from chloride, bromide, iodide, sulfate, nitrate, nitrite, acetate, chlorate, perchlorate, bisulfate, bicarbonate, oxalate, maleate, p-toluenesulfonate, carbonate, and phosphate; and

n is an integer for which the anion X satisfies the valence of the cation M;

and, as said solid carrier material (ii), one or more of the following inert materials in finely-divided water-insoluble solid form: silicaceous diatomaceous earth, high water absorption capacity calcium silicate granular material, clays, charcoal, vermiculite, corn cobs, high purity silica and wood.

4. An article according to claim 3 wherein said composition

(a) comprises (i) 1-35 weight %, based on total weight of said composition, of said isothiazolone having a water solubility of 1000 ppm or greater wherein

Y is an unsubstituted or substituted $C_1$-$C_{18}$ alkyl group or $C_3$-$C_{12}$ cycloalkyl group;

R is hydrogen or halogen;

R' is hydrogen or halogen; or

R and R' are taken together with the C=C bond of the 3-isothiazolone ring to form a benzene ring;

or said isothiazolone stabilized with said metal salt; and (ii) 99-65 weight %, based on total weight of said composition, of silicaceous diatomaceous earth, high water absorption capacity calcium silicate granular material, and/or clay(s); as the solid carrier embedded in, as the high-melting solid binder, (b) paraffin wax, beeswax, and/or carnauba wax.

5. An article according to claim 4 wherein said composition (a) comprises (i) 2-25 weight %, based on total weight of said composition, of said isothiazolone wherein Y is methyl, R is hydrogen, and R' is chlorine or said isothiazolone stabilized with $Mg(NO_3)_2$ or a mixture of $Mg(NO_3)_2$ and $MgCl_2$; and (ii) 98-75 weight % based on total weight of said composition, of silicaceous diatomaceous earth; and wherein said water-insoluble high-melting solid binder (b) is paraffin wax.

6. An article according to claim 4 or 5 wherein said composition (a) comprises (i), in combination with said water-soluble isothiazolone, isothiazolone having a room temperature water solubility less than 1000 ppm, usually about 500 ppm, wherein Y is _n_-octyl or _t_-octyl and R and R' are each hydrogen, provided that the combined solubility remains at least 1000 ppm at room temperature or said combination of isothiazolones stabilized with

$Mg(NO_3)_2$ or a mixture of $Mg(NO_3)_2$ and $MgCl_2$, the combination comprising 2-25 weight %, based on total weight of said composition; and (ii) 98-75 weight %, based on total weight of said composition, of silicaceous diatomaceous earth; and wherein said water-insoluble, high-melting solid binder (b) is paraffin wax.

7. An article according to claim 6 wherein said composition (a) comprises (i) 2-25 weight %, based on total weight of said composition, of a mixture of said isothiazolones wherein (i') Y is methyl, R is hydrogen and $R'$ is chlorine and (ii') Y is methyl, R is hydrogen and $R'$ is hydrogen, or said mixture stabilized with $Mg(NO_3)_2$ or a mixture of $Mg(NO_3)_2$ and $MgCl_2$.

8. A method for controlling living microorganisms in an aqueous system which comprises incorporating into the aqueous system an article as claimed in any preceding claim especially claims 1, 4 or 7 containing sufficient composition to provide in the aqueous system a microbiocidally-effective amount of said microbiocidal compound.

9. A method according to claim 9 which comprises using the article in a metal-working fluid, swimming pool, water tower or toilet bowl or cistern.

10. A method for safening microbiocidal isothiazolones which comprises preparing a solid disc or plug or pelletized solid particles containing particulate solid microbiocidal composition comprising microbiocidally-effective isothiazolone as the free isothiazolone or metal salt complex thereof and inert, finely-divided water-insoluble solid carrier material embedded in water-insoluble, high-melting solid binder.

11. A method for the controlled, protracted release of microbiocidal compound into an aqueous system wherein an article as claimed in any of claims 1 to 7 is introduced into an aqueous system which is permitted to diffuse into it so as to dissolve the isothiazolone which is released into and through the aqueous system and wherein the rate of release of isothiazolone is determined and protracted to the desired interval for release of all of the active ingredient by adjusting the ratio of the surface area to the volume of the solid disc or plug or pelletized solid particles combined with selecting microbiocidal isothiazolone of appropriate water-solubility.

European Patent Office

# EUROPEAN SEARCH REPORT

0106563

Application number

EP 83 30 5580

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 105 431 (S.N. LEWIS et al.) * Table 1; examples 7,36,37,38; column 15, lines 29-37; column 19, lines 47-59; column 20, lines 55-62; column 21, lines 13-18; claims 1-14, 25-27 * | 1,3-13 | A 01 N 25/34<br>C 02 F 1/50<br>A 01 N 43/80<br>A 01 N 25/10<br>A 01 N 25/22 |
| D,Y | US-A-4 241 214 (G.A. MILLER et al.) * Table 1; examples 1-17, 21-26; column 14, line 58 - column 15, line 2; column 15, line 64 - column 16, line 3, lines 22-27; claims 1-3 * | 1,3-13 | |
| D,Y | US-A-3 517 022 (G.A. MILLER et al.) * Column 1, line 51 - column 2, line 14; column 7, lines 47-55; column 8, lines 35-42, 61-66 * | 1,3-13 | TECHNICAL FIELDS SEARCHED (Int. Cl. 3) |
| Y | EP-A-0 021 477 (SHELL) * Page 2, lines 7-13; page 3, lines 8-15; claims 1,2,5-7,11-13 * | 1,2 | A 01 N<br>C 02 F |
| Y | GB-A-1 433 303 (DOW CORNING) * Page 2, lines 33-44; page 6, lines 34-47; page 7, lines 1-49; claims 1,9,10,12,18-27 * | 1,2 | |

--- -/-

The present search report has been drawn up for all claims

| Place of search | Date of completion of the search | Examiner |
|---|---|---|
| THE HAGUE | 18-01-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0106563

European Patent Office

# EUROPEAN SEARCH REPORT

Application number

EP 83 30 5580

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| A | US-A-3 753 676 (J.L. HALLEY)<br>* Column 5, line 66 - column 6, line 38; claims *<br>----- | 1,2,8, 9,11 | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 18-01-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document